# EUROPEAN PATENT SPECIFICATION

(11) **EP 1 438 624 B1**
(45) Date of publication and mention of the grant of the patent: **10.05.2006**
(21) Application number: 02783420.9
(22) Date of filing: 22.10.2002
(51) Int. Cl.: G02B 6/44

(54) **AUTOMATED MANUFACTURING EQUIPMENT AND PROCESS FOR ASSEMBLY OF ORDERED OPTIC FIBER ARRAYS**
GERÄT ZUR AUTOMATISCHEN HERSTELLUNG UND PROZESS ZUR ANORDNUNG VON GEORDNETEN OPTISCHEN FASERARRAYS
EQUIPEMENT ET PROCEDE DE FABRICATION AUTOMATISE PERMETTANT L'ASSEMBLAGE DE RESEAUX ORDONNES DE FIBRES OPTIQUES

(30) Priority: 25.10.2001 US 1517
(43) Date of publication of application: 21.07.2004
(73) Proprietor: Schott AG, 55122 Mainz (DE)
(72) Inventor: TABOR, Kevin, Webster, MA 01570 (US)
(74) Representative: Sawodny, Michael-Wolfgang
(86) International application number: PCT/IB2002/004918
(87) International publication number: WO 2003/036347

(56) References cited:
- EP-A- 0 587 336
- EP-A- 0 856 759
- EP-A- 1 061 393
- WO-A-99/13367
- US-B1- 6 224 269
- US-B1- 6 464 404
- PATENT ABSTRACTS OF JAPAN vol. 018, no. 657 (P-1842), 13 December 1994 (1994-12-13) & JP 06 258533 A (SUMITOMO ELECTRIC IND LTD;OTHERS: 01), 16 September 1994 (1994-09-16)

## Description

BACKGROUND

The present invention is directed to the assembly of ordered optic fiber arrays. More particularly, the invention provides equipment and a process to manufacture ordered, multiple ended optic fiber arrays.

As a result of progressing technology, the need to create high-speed optical data interconnections has increased. Opto-electronic components used in high speed communications have become more prevalent. Connections between such opto-electronic components has typically been made through separately connected optic fibers. This has the disadvantage of increased routing and installation time requirements. It has also been known to use a machine to place a number of fibers on an adhesive coated substrate to form a single layer matrix with the desired optic fiber routing in a semi-rigid card form. The resulting product, however, is prone to microbending sensitivity and offers little routing flexibility after construction. It is also limited in size and increases the potential for damage to sensitive electronic components by overheating due to reduced air flow caused by the substrate.

The increase in the type and number of opto-electronic components has necessitated the creation of multiple ended ordered optic fiber arrays which may extend one-two meters or more to link these components. The differing features of opto-electronic components and the large number of potential arrangements of these components often necessitates special optic fiber array designs that allow some routing flexibility, while also allowing for easier and faster handling during installation.

The assignee of the present invention developed a method by which multiple ended ordered optic fiber arrays were manually assembled using ribbons of optical fibers which were manually placed into holders on a first side of the array. A chemical solution was used to remove the binding agent holding the ribbonized fibers together on the opposite side of the array. The ends of the fibers of the formerly connected ribbon are then manually separated and re-ordered into different end fiber array configurations, as needed based on particular routing requirements. The reordered ends are then coated with a binding agent. A multiple ended optical fiber array was formed upon the curing of the binding agent having the required routing for a particular application and having both flexibility for placement and convenience during assembly since multiple connections can be made at the same time. Because this process was manual, excessive time was spent in manually re-ordering and/or rerouting the output fibers to create multiple ended fiber optic arrays. This can result in low production rates, high cost, and poor quality control. Document WO 99/13367 also describes a method for manufacturing a cross-connected matrix of optical fibre ribbons and an apparatus for carrying out this method.

It would be desirable to create a more efficient method to form multiple ended ordered optic fiber arrays. It would also be desirable to create a methodology for forming differing types of multiple ended ordered optic fiber arrays to be used in different applications. It would also be desirable to create an apparatus that can quickly and reliably manufacture multiple ended ordered arrays of optical fibers in various desired configurations.

SUMMARY

The invention relates to a method as claimed in claim 1 and to an apparatus for carrying out this method as claimed in claim 8.

BRIEF DESCRIPTION OF THE DRAWING(S)

The foregoing summary as well as the following detailed description of the preferred embodiments will be better understood when read in conjunction with the appended drawings. For the purpose of illustrating the invention, two preferred embodiments are shown. However, it should be understood that the invention is not limited to the precise arrangements shown.

Figure 1 is a perspective view of an example for ordered array optic fiber positioning apparatus.

Figure 2 is a perspective view of an optic fiber positioning fixture.

Figure 3 is a perspective view of generally vertical fiber grippers used in the fixture of Figure 1.

Figure 4 is a perspective view of generally horizontal fiber grippers which can be used in conjunction with the optic fiber positioning fixture of Figure 1.

Figure 5 is a side view of an assembly line for producing cross-connected matrices of optical fibers.

Figure 6 is a perspective of a plurality of fiber grippers which form multiple optic fiber paths.

Figure 7 is a view of a modular pallet carrier which can be used in the present invention.

Figure 8 is a perspective view of the optic fiber positioning fixture with end posts used for routing a single optic fiber along multiple optic fiber paths.

Figure 9 is a perspective view of a plurality of optic fiber positioning fixtures used for extended routing of optic fibers.

DETAILED DESCRIPTION OF THE PREFERRED EMBODIMENT(S)

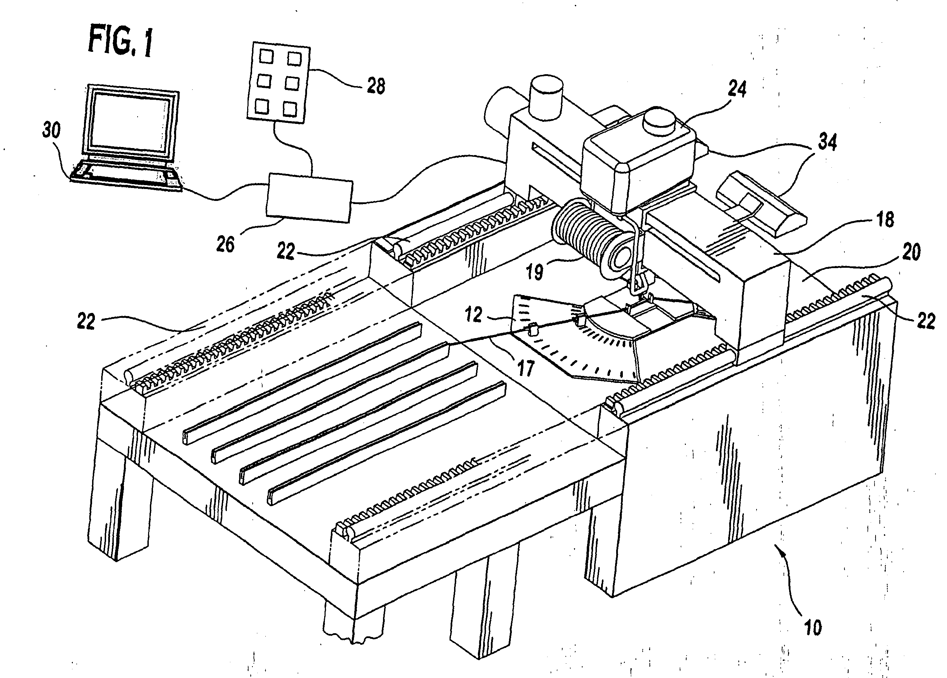

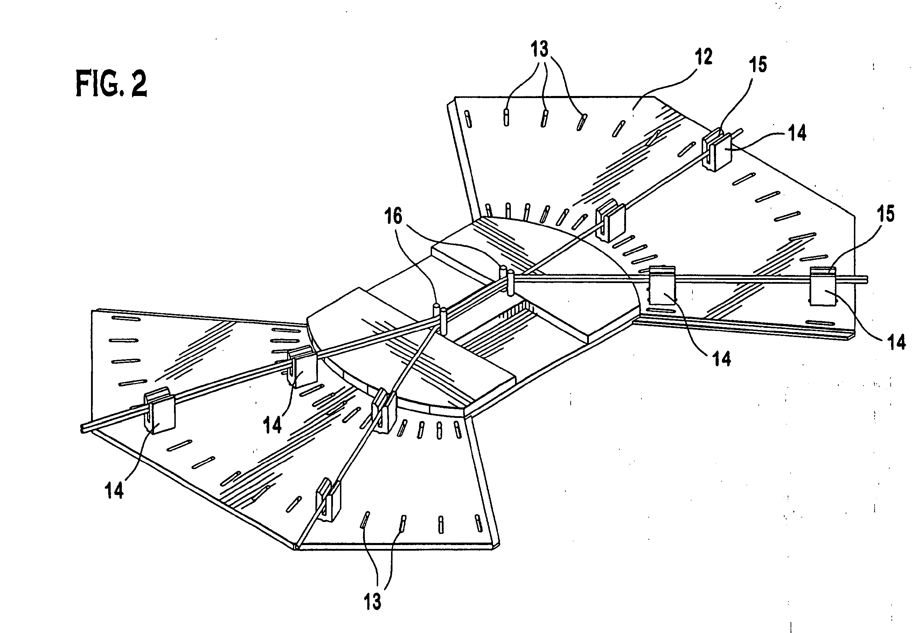

Referring to Figure 1, an example for an optic fiber positioning apparatus 10 for producing a cross-connected matrix of optic fibers is shown. The optic fiber positioning apparatus 10 includes an optic fiber positioning fixture 12, shown in detail in Figure 2. The fixture 12 includes fiber guides 14 located thereon which are adapted to hold optic fiber runs, as will as be described in detail below. Each of the fiber guides 14 is preferably removably connectable to the fixture 12 via slots 13 located on the fixture 12. The guides 14 preferably include a guide slot 15 having a width approximately equal to a diameter of the optic fiber being arranged, and guides 14 with slots 15 of different widths may be provided for different sized optic fibers.

As shown in detail in Figure 2, preferably posts 16 are provided in a transition area between the sets of guides 14 located on opposite sides of the fixture 12. The posts 16 provide a turning radius transition for the optic fibers that are positioned in the fixture 12. Optic fiber runs 17, for example such as those shown in Figures 1 and 2 are preferably placed along a path formed by two guides 14 located on one side of the central transition area, the posts 16 located in the transition area and guides 14 located on the opposite side of the transition area. A single optic fiber run 17 is shown in Figure 1, and a plurality of guide sets 14 are shown positioned on the fixture 12 in Figure 2 form multiple paths for multiple fiber runs.

An optic fiber dispensing head 19 is connected to a moveable positioning system 18 located in proximity to and generally over the optic fiber positioning fixture 12, which is located on a support surface 20. While the positioning system is located above the fixture 12 in the preferred embodiment, it is also possible for the fixture 12 to be mounted in a different orientation and the positioning system 18 being located in a corresponding location such that it can move in at least three dimensions (x, y, z) relative to the fixture 12.

The positioning system is a gantry 18 which traverses the support surface 20 of the apparatus 10 in a first direction along guide rails 22. The dispensing head 19 can be moved transversely along the gantry 18 in a second direction, and may be moved up and down in a third direction. It is also possible for the dispensing head to be rotatable about the generally vertical movement axis to aid in routing the fiber.

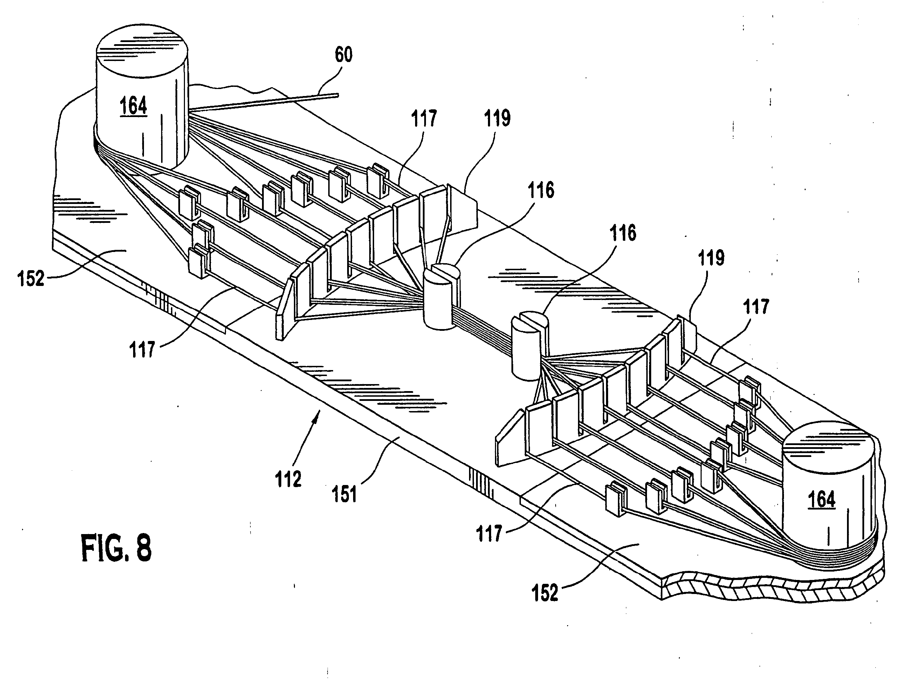

As shown in Figure 1, the moveable positioning system 18 is connected to a programmable controller 26 to control movement of the optic fiber dispensing head 19 to place the fiber runs 17 according to a predetermined map. The predetermined map is defined by a user and programmed in the controller 26, based upon the particular application. The number of input groups and output groups offiber runs 17 is programmed, along with the specific routing of the individual fiber runs 17 from the input groups to the output groups. Each optic fiber run 17 is placed in one of the plurality of optic fiber paths defined by the guides 14 and the posts 16. The optic fiber which is dispensed by the dispensing head 19 to form each of the optic fiber runs 17 may be cut into separate pieces after each run is placed, as shown in Figure 2 or may be routed to form a plurality of optic fiber runs 17, as shown in Figure 8, prior to the optic fiber being cut to form the individual runs 17 grouped in the respective input and output groups. The ends of the fiber runs 17 are specified as being located in "input" and "output" groups for the sake of establishing a naming connection, and those skilled in the art will recognize that this is not intended to mean that the fiber run ends in either of the groups or are limited to receiving or emitting optic signals, and the fiber ends in both groups can receive and/or transmit optic signals.

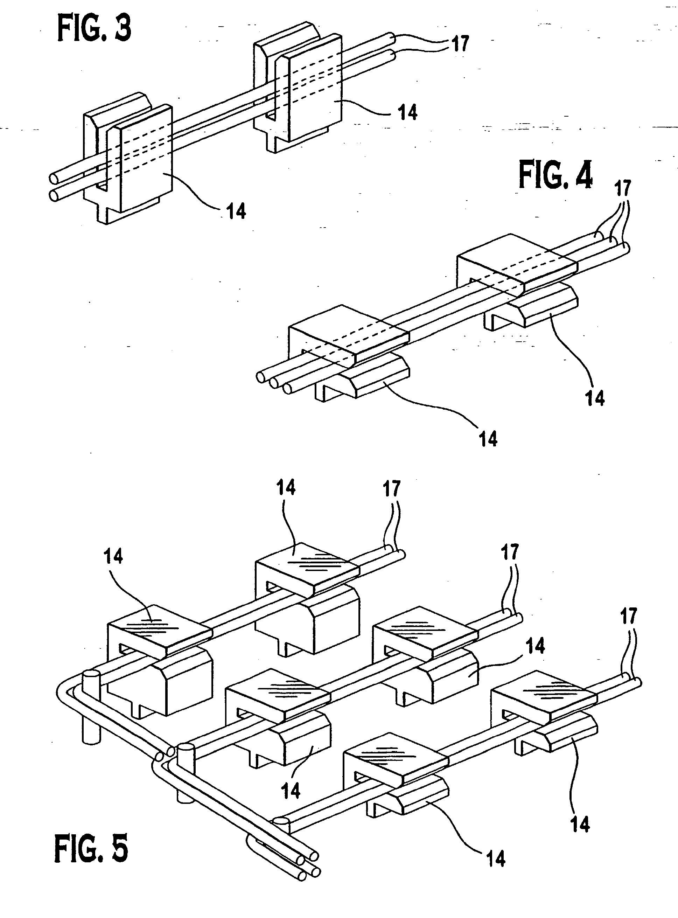

Referring to Figures 3-5, the guides 14 may be placed vertically or horizontally, as shown. It is also possible for additional posts 16 to be provided in the central area, as shown in Figure 5, to assist in routing the optic fiber along the paths in order to define a plurality of optic fiber runs 17. The guide slots 15 are preferably sized to be approximately equal to the diameter of the fiber being placed so that the fibers can be held in order in a generally flat linear array within the guides 14.

As shown in Figure 1, a coating application system 24 may be provided on the moveable positioning fixture 18. After the at least one optic fiber has been routed along the desire paths, the coating application system 24 is used to coat the input and output groups of the fiber runs 17 with an adhesive to hold the fiber ends together such that arrays of fibers are formed. The preferred coating system uses a UV acrylate. However, any other suitable coating which would ensure adhesion of the optic fibers and prevent micro bending would be suitable. The coating may be cured using UV lamps, 34 depending upon the coating system being utilized. The process of coating and curing the optic fibers into defined ribbons allows for easier handling of the cross-connected matrix of optical fibers produced by the present invention during installation between different opto-electronic devices.

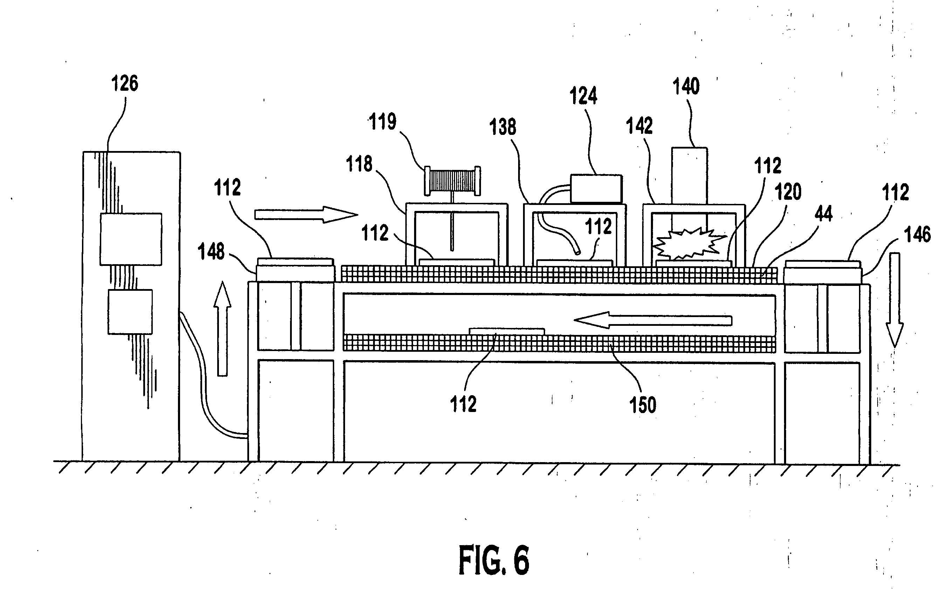

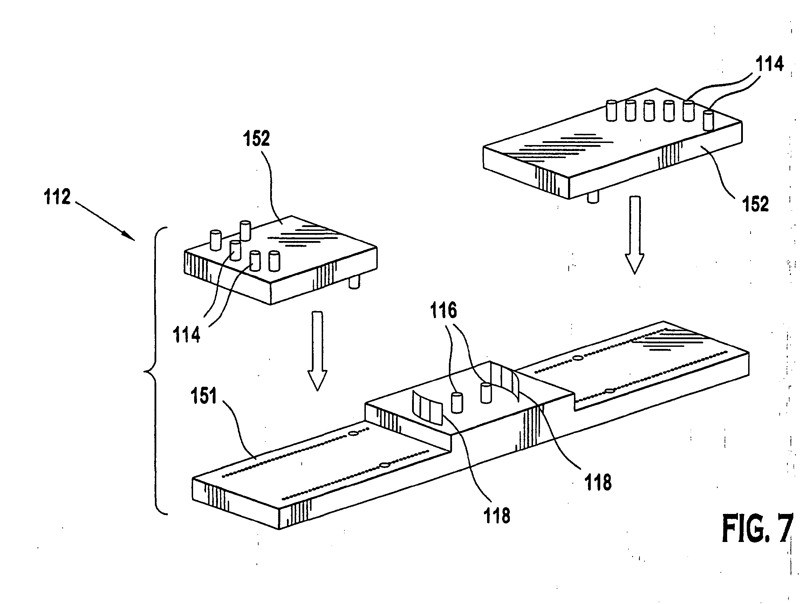

Referring now to Figures 6-8, an apparatus for producing a cross-connected matrix of optical fibers.is shown. The apparatus 110 is similar to the apparatus 10. However, as shown in Figure 6, the support surface 120 is a moving conveyor belt which can be used to move the fixture 112 between a plurality of processing positions. The fiber optic positioning fixture 112 is placed upon the conveyor 120 which is connected to the programmable controller 126. The conveyor 120 moves the fiber optic positioning fixture 112 from a first position, where the dispensing head 119 located on a moveable positioning system 118 is used to route the optic fiber on the fixture 112, to a second position where a coating system 124 applies a coating to at least the ends of the optic fiber runs. The coating system 124 is preferably mounted on a moveable positioning system 138 so that the material can be applied to the optic fiber runs in only the desired locations. The conveyor 120 then carries the fixture 12 with the coated optic fiber runs to a coating curing system 140 which is also mounted on a movable positioning system 142. The coating curing system 140 is moved by the positioning system 142 such that UV light is applied to the coating in the desired locations.

Elevators 146, 148 are provided at either ends of the conveyor 120. First elevator 146 receives the fixture 112 with the cross-connected matrix of optic fibers thereon and delivers it to a return conveyor 150. The return conveyor 150 delivers the fixture back to the beginning of the conveyor 120 were the second elevator 148 elevates it to a work station position where the cured device can be removed for further processing.

Referring to Figure 4, the fixture 112 is shown in more detail. The fixture 112 preferably includes a base plate 150 with removable locator plates 152 located thereon. The locator plates 152 include guides 114 which are mounted in fixed positions. Multiple plates 152 may be provided such that different guide configurations can be quickly and easily positioned on the fixture 112 for more flexible production operations. The guide-plates 152 can be plugged in the base plate 151 using a locator pin-hole arrangement. However, other keyed fit arrangements may be used. Turning posts 116 as well as other optic fiber guides, such as a comb arrangement 119 which are universal are preferably mounted in the central area of the base plate 151.

Referring to Figure 8, the fixture 112 is shown having an optic fiber 60 routed along multiple paths in order to form a plurality of fiber runs 117. In accordance with the present invention, wrapping posts 164 are located on opposite sides of the optic fiber positioning fixture 112. This allows a single optic fiber to be routed along the paths in order to form multiple optic fiber runs 117 without the need for cutting each individual optic fiber run 117 into a separate piece upon routing. This allows for easier tensioning of the optic fiber within the optic fiber runs 117 since a constant tension can be maintained on the optic fiber by the dispensing head 119. Alternatively, the optic fiber from the dispensing head 119 can be cut upon the completion of each fiber run 117 during the production of a cross-connected matrix of optic fibers. As shown in Figure 8, the guides 114 closest to the posts 116 have been replaced with the universal comb structure 119 having a plurality of slots located thereon. Alternatively, separate guides 14 could be utilized.

The finished routing of the optic fiber is then moved along with the fixture 112 to the coating and cure stations. Once the stacked ends of the optic fiber runs 117 have been adhered together and cured, the excess fiber which was wrapped around the parts 164 is cut off to leave a plurality of ribbonized ends.

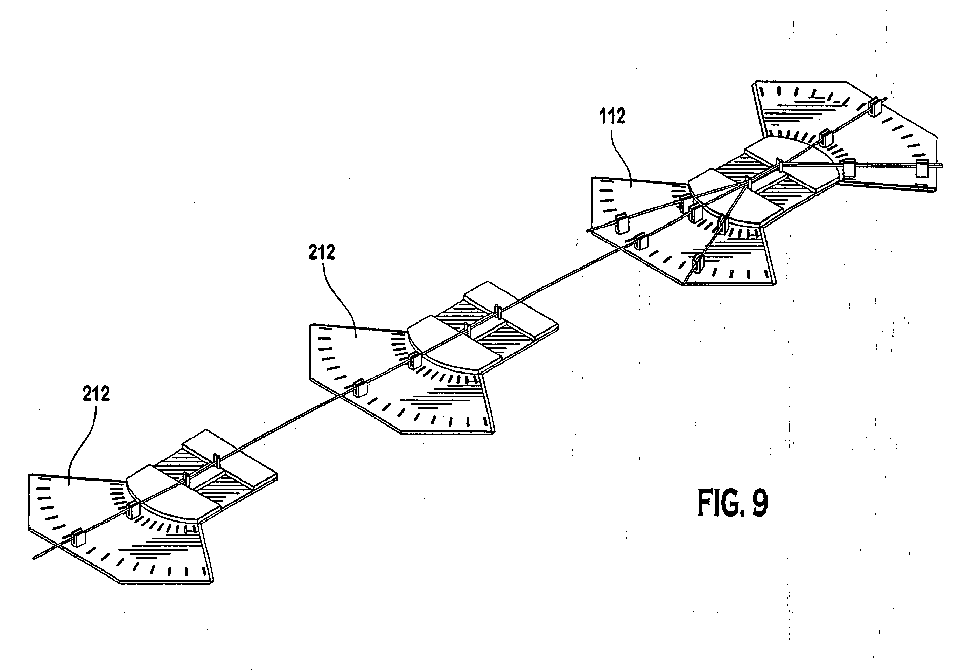

Referring to Figure 9 it is also possible to provide a plurality of optic fiber positioning fixtures 112, 212, as shown. This allows for multiple cross over positions and different length ribbons to be formed for extended routing paths.

A manufacturing process for producing a cross-connected matrix of optic fibers will now be described in connection with the apparatus 10, 110, as described above. A plurality of optic fiber paths are defined on a fiber positioning fixture 12, 112. This may be accomplished through the use of the guides 14, 114 and/or a combination of the guides 14, 114 and the combs 119, in combination with the posts 16, 116 located in the central area of the fixture 12, 112. At least one optic fiber 60 is sequentially routed on the optic fiber positioning fixture 12, 112 by arranging the at least one optic fiber 60 into n fiber runs 17, 117 having at least two input groups based on a predetermined map, which is preferably programmed into the controller 26, 126. At least m of the fiber runs 17, 117 have a first end in one of the input groups where m is an integer defined by 2 ≤ m ≤ (n-1). The least one optic fiber 60 is routed into at least two output groups based on the predetermined map through the moveable positioning system 18, 118 moving the dispensing head 19, 119. At least one of the m fiber runs 17, 117 has a second end which is in a different output group than the output group of another of the m fiber runs 17, 117. This allows a specific routing to be achieved which allow signal transmission from one or more of the input groups to one or more of the output groups in a desired fashion. The first ends of the fiber runs 17, 117 are ribbonized in the input groups and the second ends of the fiber runs 17, 117 are ribbonized in the output groups by the application of an adhesive and curing the adhesive. This is preferably accomplished using the coating system 24,124. In the case of a UV acrylate coating system, preferably a curing station is provided for curing the coating using UV light. This results in a cross-connected matrix of optic fibers in which the first ends of the optic fiber runs 17, 117 in at least one of the input groups are arranged in a 1 x r array where r is an integer greater than or equal to two and the second ends of the optic fiber runs in at least one of the output groups are arranged in a 1 x s array where s is an integer greater than or equal to two. The optic fiber may be routed through the defined paths as a single continuous optic fiber which can be wrapped around one or more turning posts 164 located beyond the guides 14, 114 on the positioning fixture 12, 112. Alternatively, the individual optic fiber runs 17, 117 may be placed as separate pieces of optic fiber and held in position. This may require additional grippers which maintain tension on the optic fiber runs 17, 117 after they have been placed.

The invention provides the advantage of automated assembly of cross-connected optic fiber arrays which can be used in optic data transmission system between one or more opto-electronic devices. It also allows the flexibility of having a cross-connected matrix of optic fibers which is flexible and adaptable to different position of the opto-electronic devices being connected.

Further modifications and extensions of the present invention may be developed based upon the foregoing, and all such modifications are deemed to be within the scope of the present invention as defined by the appended claims.

## Claims

1. A manufacturing process for producing a cross-connected matrix of optic fiber comprising:
providing a plurality optic fiber paths on a fiber positioning fixture (112); sequentially routing an optic fiber on the optic fiber positioning fixture (112) by arranging the optic fiber into n fiber runs (117) along the plurality of optic fiber paths having at least two input groups based on a predetermined map, with at least m of the fiber runs having a first end being in one of the input group, where m is a integer defined by 2 ≤ m ≤ (n - 1);
arranging the optic fiber such that at least two fiber are in a predetermined map, with the output end of at least one of the m fibers being in a different output group than the output group of another of the m fibers; and
ribbonizing the first end of the fiber runs in the input groups and ribbonizing the second ends of the fiber runs in the output groups,
wherein wrapping posts (164) are located on opposite sides of the optic fiber position fixture (112), allowing a single optical fiber to be routed along the plurality of fiber runs in order to form multiple optic fiber runs (117), and
wherein the fibre is cut adjacent the wrapping posts to leave a plurality of ribbonised fibre ends.

2. The process of claim 1, further comprising arranging the first ends of the optic fiber runs in at least one of the input groups into a 1xr array, where is an integer ≥ 2.

3. The process according to one of the claims 1 to 2, further comprising arranging the second ends of the optic fiber runs in at least one of the output groups into a 1xs array, where s is an integer ≥ 2.

4. The process according to one of the claims 1 to 3, furthermore comprising vertically aligning the first and second ends of the optic fiber runs in the input groups and the output groups prior to ribbonizing.

5. The process according to one of the claims 1 to 4, further comprising holding the input groups and the output groups in position with fiber guides on the optical fiber positioning fixture prior to and during the ribbonizing.

6. The process, according to one of the claims 1 to 5, further comprising arranging the optical fiber runs using a computer control, and programming the predetermined map into the computer controlled optic fiber dispensing head connected to a moveable positioning system.

7. The process according to one of the claims 1 to 6, further comprising arranging the first and second ends of the fiber runs such that a number of input an output groups created is equal to a number of fiber runs in each of the input and output groups, the fibers from each input group being routed to different output groups.

8. An apparatus for producing a cross-connected matrix of optical fibers comprising:
An optic fiber positioning fixture (112);
fiber guides (114) located on the optic fiber positioning fixture (112) adapted to hold optic fiber runs (117);
an optic fiber dispensing head (19) connected to a movable positioning system (18) located in proximity to the optic fiber positioning fixture (112); and
a programmable controller connected to the movable positioning system (18) to control movement of the optic fiber dispensing head (19) to place the fiber runs (117) according to a predetermined map, wherein the optic fiber positioning fixture are provided with wrapping posts (164) at opposite ends of the fixture allowing a single optical fiber to be routed along a plurality of fiber runs in order to form multiple optic fiber runs (117)

9. The apparatus of claim 8, further comprising posts (116) in a central crossover area adapted to form a central fiber crossover area and allow radial turning of optic fibers into an out of the central crossover area on the optic fiber positioning fixture.

10. The apparatus of claim 8 or 9, further comprising:
a coating application system (24) having a coating device located adjacent to the positioning fixture (112)

11. The apparatus according to one of the claims 8 to 10 wherein the fiber optic positioning fixture is movable.

12. The apparatus of claim 11, further comprising:
a conveyer (120) connected to the programmable controller (126), the conveyer adapted to move the fiber optic positioning fixture (112); and
a coating application device (124) located on a second movable positioning system (138) adjacent to the fiber dispensing head (119) movable positioning system (118).

13. The apparatus of claim 12, further comprising a coating curing system (140) located on a third movable positioning system (142) adjacent to the second movable positioning system (138).
first and second elevators (146, 148) adapted to accept the fiber optic positioning fixture (112);
and
a return conveyer (150) adapted to receive the fiber optic positioning fixture (112) and returning it to starting position.

14. The apparatus according to one of the claims 8 to 13, further comprising:
a plurality of guides (114) adapted to receive optic fibers, the guides being arranged into input and output optic fiber group locations.

15. The apparatus according to one of the claims 8 to 14, further comprising:
a plurality of guides (114) adapted to receive optic fiber runs, the guides (114) being oriented generally vertically.

16. The apparatus according to one of the claims 8 to 15, further comprising:
a plurality of guides (114) adapted to receive optic fiber runs, the guides (114) being oriented generally horizontally and being vertically spaced apart from one another.

17. The apparatus according to one of the claims 8 to 16, further comprising a second fiber optic positioning fixture spaced apart from the fiber optic positioning fixture.

## Patentansprüche

1. Herstellungsverfahren zur Herstellung einer kreuzvernetzten Matrix einer optischen Faser, umfassend:
Vorsehen einer Vielzahl von optischen Faserwegen auf einer Faser-Positionierungsvorrichtung (112);
sequentielles Verlegen einer optischen Faser auf der optischen Faser-Positionierungsvorrichtung (112) durch Anordnen der optischen Faser in n Faserstrecken (117) entlang der Vielzahl von optischen Faserwegen, wobei mindestens zwei Eingabegruppen auf einer vorbestimmten Anordnung basieren, mit mindestens m der Faserstrecken mit einem ersten Ende in einer der Eingabegruppen, wobei m eine ganze Zahl ist, definiert durch 2 ≤m≤(n-1);
Anordnen der optischen Faser derart, dass mindestens zwei Fasern in einer vorbestimmten Anordnung vorliegen, wobei das Ausgangsende mindestens einer der m Fasern in einer anderen Ausgangsgruppe vorliegt, als der Ausgangsgruppe einer der anderen m Fasern; und Ribbonisieren des ersten Endes der Faserstrecken in die Eingabegruppen und Ribbonisieren der zweiten Enden der Faserstrecken in die Ausgangsgruppen, wobei Umlenkpfosten (164) auf entgegengesetzten Seiten der optischen Faser-Positionierungsvorrichtung (112) angeordnet sind, die es erlauben, eine einzelne optische Faser entlang der Vielzahl von Faserstrecken zu verlegen, um mehrfache optische Faserstrecken (117) zu bilden, und wobei die Faser benachbart zu den Umlenkpfosten geschnitten wird, um eine Vielzahl von eingespannten Faserenden zu ergeben.

2. Verfahren nach Anspruch 1, weiterhin umfassend das Anordnen der ersten Enden der optischen Faserstrecken in mindestens einer der Eingangsgruppen in einem 1xr-Array, wobei r eine ganze Zahl ≥ 2 ist.

3. Verfahren nach einem der Ansprüche 1 bis 2, weiterhin umfassend das Anordnen der zweiten Enden der optischen Faserstrecken in mindestens einer der Ausgangsgruppen in einem 1xs-Array, wobei s eine ganze Zahl ≥ 2 ist.

4. Verfahren nach einem der Ansprüche 1 bis 3, weiterhin umfassend das vertikale Ausrichten bzw. Abstimmen der ersten und zweiten Enden der optischen Faserstrecken in den Eingangs- und Ausgangsgruppen vor dem Ribbonisieren.

5. Verfahren nach einem der Ansprüche 1 bis 4, weiterhin umfassend das in Position halten der Eingangsgruppen und der Ausgangsgruppen auf der optischen Faser-Positionierungsvorrichtung durch Faserführungen vor und während dem Ribbonisieren.

6. Verfahren nach irgendeinem der Ansprüche 1 bis 5, weiterhin umfassend das Anordnen der optischen Faserstrecken unter Verwendung von Computersteuerung und Programmieren der vorbestimmten Anordnung in den computergesteuerten, mit einem beweglichen Positionierungssystem verbundenen Spender- bzw. Verteilerkopf der optischen Faser.

7. Verfahren nach einem der Ansprüche 1 bis 6, weiterhin umfassend das Anordnen der ersten und zweiten Enden der Faserstrecken derart, dass die Anzahl der erzeugten Eingangs- und Ausgangsgruppen gleich der Anzahl der Faserstrecken in jeder der Eingangs- und Ausgangsgruppen ist, wobei die Fasern jeder Eingangsgruppe zu unterschiedlichen Ausgangsgruppen verlegt sind.

8. Vorrichtung zur Herstellung einer kreuzvernetzten Matrix optischer Fasern, umfassend:
eine optische Faser-Positionierungsvorrichtung (112);
Faserführungen (114), angeordnet auf der optischen Faser-Positionierungsvorrichtung (112), die angepasst ist, um optische Faserstrecken (117) zu halten;
ein Spender- bzw. Verteilerkopf für optische Fasern (19), verbunden mit einem beweglichen Positionierungssystem (18), angeordnet in der Nähe der optischen Faser-Positionierungsvorrichtung (112); und
eine programmierbare Steuereinheit, verbunden mit dem beweglichen Positionierungssystem (18), um die Bewegung des Spender- bzw. Verteilerkopfes für optische Fasern (19) zu steuern, um die Faserstrecken (117) gemäß einer vorbestimmten Anordnung zu platzieren, wobei die optische Faser-Positionierungsvorrichtung mit Umlenkpfosten (164) an entgegengesetzten Enden der Vorrichtung versehen ist, was es erlaubt, eine einzelne optische Faser entlang einer Vielzahl von Faserstrecken zu verlegen, um mehrfache optische Faserstrecken (117) zu bilden.

9. Vorrichtung nach Anspruch 8, weiterhin umfassend Pfosten (116) in einem zentralen Kreuzungsbereich, der angepasst ist, um einen zentralen Faserkreuzungsbereich zu bilden, und die eine radiale Richtungsänderung der optischen Fasern in und aus dem zentralen Kreuzungsbereich auf der optischen Faser-Positionierungsvorrichtung erlauben.

10. Vorrichtung nach Anspruch 8 oder 9, weiterhin umfassend:
ein Beschichtungsaufbringungssystem (24) mit einer Beschichtungsvorrichtung, angeordnet in der Nähe der Positionierungsvorrichtung (112).

11. Vorrichtung nach einem der Ansprüche 8 bis 10, wobei die faseroptische Positionierungsvorrichtung beweglich ist.

12. Vorrichtung nach Anspruch 11, weiterhin umfassend:
ein Förderband (120), verbunden mit der programmierbaren Steuereinheit (126), wobei das Förderband angepasst ist, um die faseroptische Positionierungsvorrichtung (112) zu bewegen; und eine Beschichtungsaufbringungsvorrichtung (124), angeordnet auf einem zweiten beweglichen Positionierungssystem (138), benachbart zum beweglichen Positionierungssystem (118) des Spender- bzw. Verteilerkopfs der Faser (119)

13. Vorrichtung nach Anspruch 12, weiterhin umfassend ein Beschichtungshärtungssystem (140), angeordnet auf einem dritten beweglichen Positionierungssystem (142), benachbart zum zweiten beweglichen Positionierungssystem (138);
erste und zweite Aufzüge (146, 148), angepasst, um die faseroptische Positionierungsvorrichtung (112) aufzunehmen; und
ein Rückkehrförderband (150), angepasst um die faseroptische Positionierungsvorrichtung (112) aufzunehmen und zur Anfangsposition zurückzubringen.

14. Vorrichtung nach einem der Ansprüche 8 bis 13, weiterhin umfassend:
eine Vielzahl von Führungen (114), angepasst um die optischen Fasern aufzunehmen, wobei die Führungen in Positionen der Eingangs- und Ausgangsgruppen der optischen Faser angeordnet sind.

15. Vorrichtung nach einem der Ansprüche 8 bis 14, weiterhin umfassend:
eine Vielzahl von Führungen (114), die angepasst sind, um die optischen Faserstrecken aufzunehmen, wobei die Führungen (114) im Wesentlichen senkrecht ausgerichtet sind.

16. Vorrichtung nach einem der Ansprüche 8 bis 15, weiterhin umfassend:
eine Vielzahl von Führungen (114), die angepasst sind, um die optischen Faserstrecken aufzunehmen, wobei die Führungen (114) im allgemeinen horizontal ausgerichtet und vertikal räumlich voneinander getrennt sind.

17. Vorrichtung nach einem der Ansprüche 8 bis 16, weiterhin umfassend eine zweite faseroptische Positionierungsvorrichtung, die von der faseroptischen Positionierungsvorrichtung räumlich getrennt ist.

## Revendications

1. Procédé de fabrication pour produire une matrice d'interconnexion de fibres optiques, comprenant :
la réalisation d'une pluralité de trajets de fibre optique sur un montage (112) de positionnement de fibre ;
le routage séquentiel d'une fibre optique sur le montage (112) de positionnement de fibre optique en disposant la fibre optique en n sections (117) de fibres le long de la pluralité de trajets de fibre optique comportant au moins deux groupes d'entrée sur la base d'une organisation prédéterminée, au moins m des sections de fibres ayant une première extrémité dans l'un des groupes d'entrée, où m est un nombre entier défini par 2 ≤ m ≤ (n - 1) ;
l'agencement de la fibre optique de sorte qu'au moins deux fibres sont dans une organisation prédéterminée, l'extrémité de sortie d'au moins l'une des m fibres se trouvant dans un groupe de sortie différent du groupe de sortie d'une autre des m fibres ; et
la mise en ruban de la première extrémité des sections de fibres dans les groupes d'entrée et
la mise en ruban des secondes extrémités des sections de fibres dans les groupes de sortie, où des plots (164) d'enroulement sont disposés sur des côtés opposés du montage (112) de positionnement de fibre optique, en permettant de router une seule fibre optique le long de la pluralité de sections de fibres pour former des sections multiples (117) de fibres optiques, et dans lequel la fibre est coupée au voisinage des plots d'enroulement pour laisser une pluralité d'extrémités de fibres mises en ruban.

2. Procédé selon la revendication 1, comprenant en outre l'agencement des premières extrémités des sections de fibres optiques dans au moins l'un des groupes d'entrée en un réseau de 1xr, où r est un nombre entier ≥ 2.

3. Procédé selon l'une des revendications 1 et 2, comprenant en outre l'agencement des secondes extrémités des sections de fibres optiques dans au moins l'un des groupes de sortie en un réseau de 1xs, où s est un nombre entier ≥ 2.

4. Procédé selon l'une des revendications 1 à 3, comprenant de plus encore l'alignement vertical des premières et secondes extrémités des sections de fibres optiques dans les groupes d'entrée et les groupes de sortie avant la mise en ruban.

5. Procédé selon l'une des revendications 1 à 4, comprenant en outre le maintien des groupes d'entrée et des groupes de sortie en position, à l'aide de guides de fibre, sur le montage de positionnement de fibre optique avant et pendant la mise en ruban.

6. Procédé selon l'une des revendications 1 à 5, comprenant en outre l'agencement des sections de fibres optiques en utilisant une commande informatique et la programmation de l'organisation prédéterminée dans la tête de distribution de fibre optique commandée par ordinateur, connectée à un système de positionnement mobile.

7. Procédé selon l'une des revendications 1 à 6, comprenant en outre l'agencement des premières et secondes extrémités des sections de fibres pour qu'un certain nombre dé groupes d'entrée et de sortie créés soit égal à un nombre de sections de fibres dans chacun des groupes d'entrée et de sortie, les fibres de chaque groupe d'entrée étant routées vers des groupes de sortie différents.

8. Appareil pour produire une matrice d'interconnexion de fibres optiques, comprenant :
un montage (112) de positionnement de fibre optique ;
des guides (114) de fibre situés sur le montage (112) de positionnement de fibre optique, adaptés pour maintenir des sections (117) de fibres optiques ;
une tête (19) de distribution de fibre optique connectée à un système (18) de positionnement mobile situé à proximité du montage (112) de positionnement de fibre optique ; et
un régisseur programmable connecté au système (18) de positionnement mobile pour commander le déplacement de la tête (19) de distribution de fibre optique pour placer les sections (117) de fibres selon une organisation prédéterminée, dans lequel
le montage de positionnement de fibre optique est pourvu de plots (164) d'enroulement, au niveau d'extrémités opposées du montage, permettant de router une seule fibre optique le long d'une pluralité de sections de fibres pour former des sections multiples (117) de fibres optiques.

9. Appareil selon la revendication 8, comprenant en o,utre des plots (116) situés dans une zone centrale de convergence adaptés pour former une zone centrale de convergence de fibres et pour permettre une rotation radiale de fibres optiques dans et hors de la zone centrale de convergence du montage de positionnement de fibre optique.

10. Appareil selon la revendication 8 ou 9, comprenant en outre :
un système (24) d'application de revêtement comportant un dispositif d'enduction situé adjacent au montage (112) de positionnement.

11. Appareil selon l'une des revendications 8 à 10, dans lequel le montage de positionnement de fibre optique est mobile.

12. Appareil selon la revendication 11, comprenant en outre :
un transporteur (120) connecté au régisseur programmable (126), le transporteur étant apte à déplacer le montage (112) de positionnement de fibre optique ; et
un dispositif (124) d'application de revêtement situé sur un deuxième système (138) de positionnement mobile adjacent au système (118) de positionnement mobile à la tête (119) de distribution de fibre.

13. Appareil selon la revendication 12, comprenant en outre un système (140) de polymérisation de revêtement situé sur un troisième système (142) de positionnement mobile adjacent au deuxième système (138) de positionnement mobile, des premier et second élévateurs (146, 148) aptes à accepter le montage (112) de positionnement de fibre optique ; et
un convoyeur (150) de renvoi apte à recevoir le montage (112) de positionnement de fibre optique et à le renvoyer à sa position de départ.

14. Appareil selon l'une des revendications 8 à 13, comprenant en outre :
une pluralité de guides (114) adaptés pour recevoir des fibres optiques, les guides étant agencés en positions de groupes de fibres optiques d'entrée et de sortie.

15. Appareil selon l'une des revendications 8 à 14, comprenant en outre :
une pluralité de guides (114) adaptés pour recevoir des sections de fibres optiques, les guides (114) étant orientés globalement verticalement.

16. Appareil selon l'une des revendications 8 à 15, comprenant en outre :
une pluralité de guides (114) adaptés pour recevoir des sections de fibres optiques, les guides (114) étant orientés globalement horizontalement et étant espacés verticalement les uns des autres.

17. Appareil selon l'une des revendications 8 à 16, comprenant en outre un second montage de positionnement de fibre optique espacé du montage de positionnement de fibre optique.
